# EUROPEAN PATENT APPLICATION

(11) **EP 2 840 435 A2**
(43) Date of publication of application: **25.02.2015**
(21) Application number: 14159040.6
(22) Date of filing: 12.03.2014
(51) Int. Cl.: G02F 1/1333, G02F 1/1345, G02F 1/1335

(54) **Display device and method for fabricating the same**

(30) Priority: 20.08.2013 KR 20130098635
(71) Applicant: Samsung Display Co., Ltd., Gyeonggi-Do (KR)
(72) Inventor: YE, Sang Heon, Cheonan-si (KR); Chae, Jae Hyun, Hwaseong-si (KR); Kim, Won Jin, Guryong-myeon, Buyeo-gun, (KR); LEE, Dong Hyeon, Seoul (KR)
(74) Representative: Gulde & Partner

(57) **Abstract**

Display device and method for fabricating the same are provided. In one aspect of the inventive concept, there is provided a display device comprising a display panel (100) having a first side, and a panel fixing member (300) attached to the first side of the display panel (100) using adhesives (500) interposed between the display panel (100) and the panel fixing member (300), wherein the panel fixing member (300) has a shape that corresponds to a shape of the first side of the display panel (100).

## Description

### 1. Field of the Invention

The inventive concept relates to a display device and a method for fabricating the same.

### 2. Description of the Prior Art

A display device is a device that visually displays image. The display device may be a liquid crystal display, an electrophoretic display, an organic light emitting display, an inorganic electroluminescence (EL) display, a field emission display (FED), a surface-conduction electron-emitter display (SED), a plasma display, or a cathode ray tube (CRT) display.

Recently, not only functional elements of a display device, such as picture quality, response speed, and contrast, but also physical elements of the display device, such as a width of a bezel, have been recognized as important factors to enhance the value of the product. In particular, reduction of the width of a bezel that covers the border of the display device has been strongly demanded to increase the value of the product.

### SUMMARY

The width of the bezel can be reduced through reduction of a region where a top chassis and a display panel overlap each other.

However, if the region where the top chassis and the display panel overlap each other is reduced, the top chassis may be easily become loose due to an error that occurs in a display device assembling process or an external impact, and thus the display panel may be disassembled from the top chassis. Further, because the top chassis is unable to sufficiently cover the display panel, light leakage may occur through a gap between the top chassis and the display panel.

According to some embodiment of the inventive concept, a display device having a thin bezel width, which can prevent disassembly of a display panel and light leakage through an edge portion of the display panel, is provided.

In some embodiments, a method for fabricating a display device having a thin bezel width, which can prevent disassembly of a display panel and light leakage through an edge portion of the display panel, is provided.

Additional advantages, subjects, and features of the invention will be set forth in part in the description which follows and in part will become apparent to those having ordinary skill in the art upon examination of the following or may be learned from practice of the inventive concept.

In one aspect of the inventive concept, there is provided a display device comprising a display panel having a side portion, a panel fixing member attached to the side portion of the display panel using adhesives interposed between the display panel and the panel fixing member, wherein the panel fixing member has a shape that corresponds to a shape of the side portion of the display panel.

The panel fixing member may be made of a light blocking material.

The panel fixing member may be divided into at least two parts.

The panel fixing member may surround the side portion of the display panel.

The display panel may include a plurality of circuit films positioned on the side portion, the panel fixing member may include a lower surface support portion and a side surface support portion respectively supporting a lower surface and a side surface of the display panel, and the lower surface support portion may be not formed on lower portions of the plurality of circuit films.

The side surface support portion may include bent surfaces formed on upper portions of the plurality of circuit films.

The display device may further comprise a mold frame arranged on a lower portion of the panel fixing member and having a step height portion formed thereon, wherein the panel fixing member may include a projection portion projecting to a lower portion of the lower surface support portion and engaging with the step height portion.

The display panel may include a plurality of circuit films positioned on the side portion, the panel fixing member may include opening portions formed at positions that correspond to the plurality of circuit films, and the plurality of circuit films pass through the opening portions.

The display device may further comprise a mold frame connected to the panel fixing member, wherein the mold frame may include recessed portions formed at positions that correspond to the opening portions, and the plurality of circuit films may be positioned on the recessed portions.

The display device may further comprise a bottom chassis connected to the mold frame, wherein the bottom chassis may include groove portions formed at positions that correspond to the recessed portions, and the plurality of circuit films may be inserted into the groove portions.

In another aspect of the present invention, there is provided a display device comprising a display panel having a first side and a second side adjacent to the first side, a first panel fixing member attached to the first side of the display panel, and a second panel fixing member attached to the second side of the display panel.

A step height may be formed on the first side and the second side of the display panel, and the first panel fixing member and the second panel fixing member may surround a panel projection portion that is formed by the step height.

At least two second panel fixing members may be provided, and the at least two second panel fixing members may be symmetric about a line pass through a center of the display panel.

The display device may further comprise a third panel fixing member attached to a third side of the display panel that faces the first side, wherein the third panel fixing member includes a lower surface support portion and a side surface support portion respectively supporting a lower surface and a side surface of the display panel.

The first panel fixing member, the second panel fixing member, and the third panel fixing member may be made of a light blocking material.

The display panel may be coupled to the first panel fixing member, the second panel fixing member, and the third panel fixing member by adhesives.

The display panel may comprise a plurality of data circuit films positioned on the first side to be spaced apart from each other, and a plurality of gate circuit films positioned on the second side to be spaced apart from each other, wherein the first panel fixing member may include a plurality of open spaces formed on lower portions of the plurality of data circuit films, and the second panel fixing member may include a plurality of film insertion portions into which the plurality of gate circuit films are inserted.

In another aspect of the present invention, there is provided a display device comprising a display panel having a first side; and a first panel fixing member attached to the first side of the display panel using adhesives interposed between the display panel and the first panel fixing member, wherein the first panel fixing member has a shape that corresponds to a shape of the first side of the display panel.

The first panel fixing member may be made of a light blocking material.

The first panel fixing member may surround the first side of the display panel.

The display panel may include a plurality of circuit films positioned on the first side, the first panel fixing member may include a lower surface support portion and a side surface support portion respectively supporting a lower surface and the first side of the display panel, and the lower surface support portion may not be formed on lower portions of the plurality of circuit films, wherein the side surface support portion may include bent surfaces formed on upper portions of the plurality of circuit films.

The display panel may include a plurality of circuit films positioned on the first side, the first panel fixing member may include opening portions formed at positions that correspond to the plurality of circuit films, and the plurality of circuit films may pass through the opening portions.

The display panel may further comprise a second side adjacent to the first side; and a second panel fixing member may be attached to the second side of the display panel.

In still another aspect of the present invention, there is provided a method for fabricating a display device comprising forming a panel assembly that includes a display panel, a panel fixing member attached to at least one side portion of the display panel, and adhesives interposed between the display panel and the panel fixing member, and coupling the panel assembly to a backlight assembly.

The forming the panel assembly may comprise arranging the display panel and the panel fixing member so that a circuit film positioned on the side portion of the display panel and an opening portion formed on the panel fixing member correspond to each other, and coupling the display panel and the panel fixing member to each other so that the circuit film passes through the opening portion and is bent to extend to a lower portion of the panel fixing member.

The coupling the panel assembly to the backlight assembly may comprise connecting the panel fixing member of the panel assembly and a mold frame of the backlight assembly to each other using a double sided adhesion tape.

According to embodiments of the present invention, at least the following effects can be achieved.

The disassembly of the display panel and the light leakage through the edge portion of the display panel can be prevented.

Further, the display device with a thin bezel width can be provided.

The effects according to the present invention are not limited to the contents as exemplified above, but more various effects are described in the specification of the present invention.

### BRIEF DESCRIPTION OF THE DRAWINGS

The above and other objects, features and advantages of the inventive concept will be more apparent from the following detailed description taken in conjunction with the accompanying drawings, in which:
FIG. 1 is an exploded perspective view of a display device according to an embodiment of the inventive concept;
FIG. 2 is a perspective view of a display panel and a panel fixing member of the display device of FIG. 1;
FIG. 3 is a plan view of a display panel and a panel fixing member of the display device of FIG. 1;
FIG. 4 is a front view of a first panel fixing member of the display device of FIG. 1;
FIG. 5 is a cross-sectional view taken along line F-F' of FIG. 3;
FIG. 6 is a cross-sectional view taken along line G-G' of FIG. 3;
FIG. 7 is a front view of a second panel fixing member of the display device of FIG. 1;
FIG. 8 is a cross-sectional view taken along line H-H' of FIG. 3;
FIG. 9 is a cross-sectional view taken along line I-I' of FIG. 3;
FIG. 10 is a front view of a third panel fixing member of the display device of FIG. 1;
FIG. 11 is a cross-sectional view taken along line J-J' of FIG. 3;
FIG. 12 is a perspective view of a mold frame of the display device of FIG. 1;
FIG. 13 is a perspective view of a bottom chassis of the display device of FIG. 1;
FIGS. 14 and 15 are a perspective cross-sectional view and a cross-sectional view taken along line A-A' of FIG. 1;
FIGS. 16 and 17 are a perspective cross-sectional view and a cross-sectional view taken along line B-B' of FIG. 1;
FIGS. 18 and 19 are a perspective cross-sectional view and a cross-sectional view taken along line C-C' of FIG. 1;
FIGS. 20 and 21 are a perspective cross-sectional view and a cross-sectional view taken along line D-D' of FIG. 1;
FIGS. 22 and 23 are a perspective cross-sectional view and a cross-sectional view taken along line E-E' of FIG. 1;
FIGS. 24 to 26 are perspective views illustrating by steps a method for fabricating the display device of FIG. 1;
FIG. 27 is a perspective view of a display panel and a panel fixing member of a display device according to another embodiment of the inventive concept;
FIG. 28 is a cross-sectional view taken along line K-K' of FIG. 27;
FIG. 29 is a perspective view of a display panel and a panel fixing member of a display device according to still another embodiment of the inventive concept;
FIG. 30 is a cross-sectional view taken along line L-L' of FIG. 29;
FIG. 31 is a cross-sectional view taken along line M-M' of FIG. 29;
FIG. 32 is a perspective view of a display panel and a panel fixing member of a display device according to yet still another embodiment of the inventive concept;
FIG. 33 is a cross-sectional view taken along line N-N' of FIG. 32; and
FIG. 34 is a cross-sectional view taken along line O-O' of FIG. 32.

### DETAILED DESCRIPTION OF THE EMBODIMENTS

Advantages and features of the inventive concept and methods of accomplishing the same may be understood more readily by reference to the following detailed description of embodiments and the accompanying drawings. The inventive concept may, however, be embodied in many different forms and should not be construed as being limited to the embodiments set forth herein. Rather, these embodiments are provided so that this disclosure will be thorough and complete and will fully convey the inventive concept to those skilled in the art, and the inventive concept will only be defined by the appended claims. Thus, in some embodiments, well-known structures and devices are not shown in order not to obscure the description of the invention with unnecessary detail. Like numbers refer to like elements throughout. In the drawings, the thickness of layers and regions are exaggerated for clarity.

It will be understood that when an element or layer is referred to as being "on," or "connected to" another element or layer, it can be directly on or directly connected to the other element or layer or it can be disposed on or connected to the other element of layer with intervening elements or layers. In contrast, when an element is referred to as being "directly on" or "directly connected to" another element or layer, there are no intervening elements or layers present. As used herein, the term "and/or" includes any and all combinations of one or more of the associated listed items.

Spatially relative terms, such as "below," "beneath," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures.

Embodiments described herein will be described referring to plan views and/or cross-sectional views by way of ideal schematic views of the invention. Accordingly, the exemplary views may be modified depending on manufacturing technologies and/or tolerances. Therefore, the embodiments of the invention are not limited to those shown in the views, but include modifications in configuration formed on the basis of manufacturing processes. Therefore, regions exemplified in figures have schematic properties and shapes of regions shown in figures exemplify specific shapes of regions of elements and not limit aspects of the invention.

A display device is a device that displays an image. The display device may be a liquid crystal display, an electrophoretic display, an organic light emitting display, an inorganic electroluminescence (EL) display, a field emission display (FED), a surface-conduction electron-emitter display (SED), a plasma display, or a cathode ray tube (CRT) display.

Hereinafter, as a display device according to an embodiment of the inventive concept, a liquid crystal display is exemplified. However, the display device according to the inventive concept is not limited thereto, and various kinds of display devices may be used.

Hereinafter, embodiments of the inventive concept will be described with reference to the accompanying drawings.

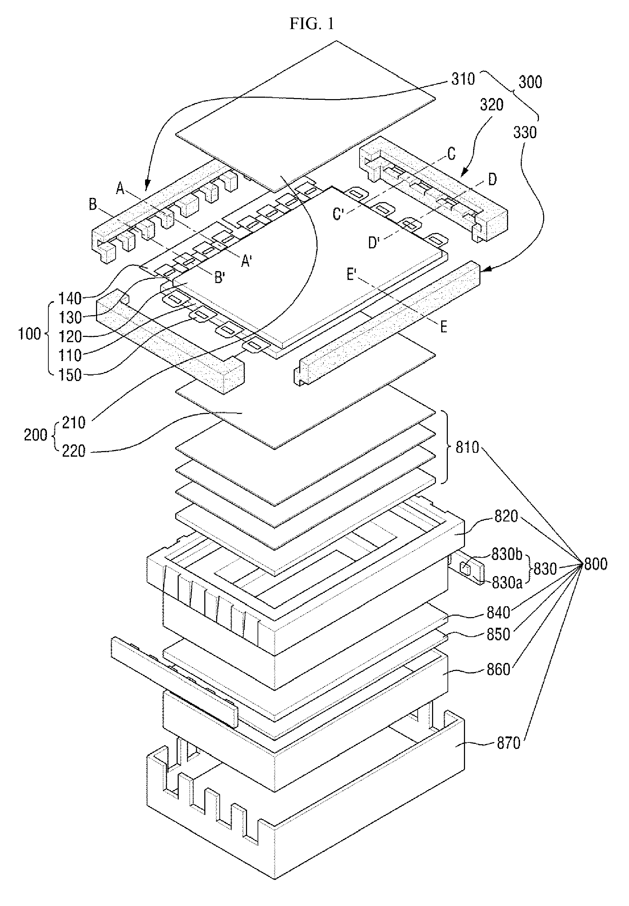

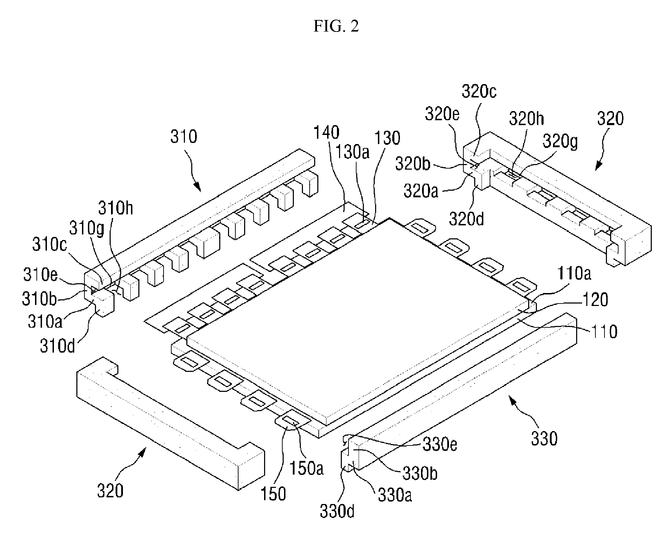

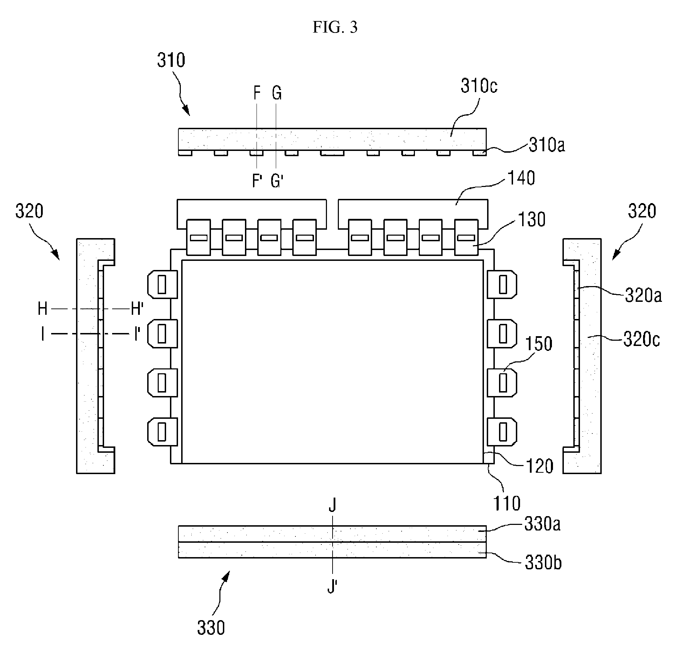

FIG. 1 is an exploded perspective view of a display device according to an embodiment of the inventive concept. FIG. 2 is a perspective view of a display panel 100 and a panel fixing member 300 of the display device of FIG. 1, and FIG. 3 is a plan view of a display panel 100 and a panel fixing member 300 of the display device of FIG. 1. Referring to FIGS. 1 to 3, a display device according to an embodiment of the inventive concept includes a display panel 100 and a panel fixing member 300.

The display panel 100 may be a panel that displays an image. The display panel 100 may include a first substrate 110, a second substrate 120, a data circuit film 130, a printed circuit board 140, and a gate circuit film 150.

The first substrate 110 may be a thin film transistor substrate that includes thin film transistors, and the second substrate 120 may be an opposite substrate. The opposite substrate may include color filters. A liquid crystal layer (not illustrated) may be interposed between the first substrate 110 and the second substrate 120. The first substrate 110 and the second substrate 120 respectively have an upper surface, lower surface and a side surface which connects the upper surface and the lower surface.

The size of the first substrate 110 may be larger than the size of the second substrate 120. Accordingly, a region where the first substrate 110 and the second substrate 120 do not overlap each other may be formed on a side portion of the first substrate 110. The first substrate 110 and the second substrate 120 may be vertically coupled to each other so that a step height is formed on side portions of the first substrate 110 and the second substrate 120 after coupling. Hereinafter, a portion of the first substrate 110 which does not overlap the second substrate 120 is called a panel projection portion 110a.

The data circuit film 130 may be formed on the panel projection portion 110a. Specifically, the data circuit film 130 may be formed on the panel projection portion 110a that is positioned on the first side of the display panel 100. The data circuit film 130 may apply a data signal, such as an image signal, to the first substrate 110.

The data circuit film 130 may have flexibility. In an exemplary embodiment, the data circuit film 130 may be made of a plastic material having flexibility. Further, the data circuit film 130 may be a FPC (Flexible Printed Circuit board), a TCP (Tape Carrier Package) or a COF (Chip On Film). A plurality of data circuit films 130 may be provided. The plurality of data circuit films 130 may be arranged to be spaced apart from each other on the thin film transistor substrate.

The data circuit film 130 may include a data driving chip 130a. The data driving chip 130a may be formed as an integrated circuit, and may generate the data signals. The data driving chip 130a may be formed to project from the data circuit film 130.

The printed circuit board 140 may be formed to be connected to end portions of the plurality of data circuit film 130. The printed circuit board 140 may be an S-PBA (Source-Printed Board Assembly). In an exemplary embodiment, one printed circuit board 140 may be connected to end portions of at least two data circuit films 130. A plurality of printed circuit boards 140 may be provided. The plurality of printed circuit boards 140 may be arranged to be spaced apart from each other.

Although not illustrated, the display panel 100 may further include a timing controller board connected to the printed circuit board 140. The printed circuit board 140 may be omitted and the timing controller board may be directly connected to the data circuit film 130.

The gate circuit film 150 may be formed on the panel projection portion 110a. Specifically, the gate circuit film 150 may be formed on the panel projection portion 110a that is positioned on the second side of the display panel 100 that is adjacent to the first side of the display panel 100. The gate circuit film 150 may be formed on both sides of the display panel 100 so that the gate circuit film 150 is symmetric about a line pass through a center portion of the display panel 100. The gate circuit film 150 may apply a gate signal to the first substrate 110.

The gate circuit film 150 may have flexibility. In an exemplary embodiment, the gate circuit film 150 may be made of a plastic material having flexibility. Further, the gate circuit film 150 may be a FPC (Flexible Printed Circuit board), a TCP (Tape Carrier Package) film or a COF (Chip On Flexible Printed Circuit) film. Further, the gate circuit film 150 may be made of the same material as the material of the data circuit film 130. A plurality of gate circuit films 150 may be provided. The plurality of gate circuit films 150 may be arranged to be spaced apart from each other.

The gate circuit film 150 may include a gate driving chip 150a. The gate driving chip 150a may be formed as an integrated circuit, and may generate a gate signal. The gate driving chip 150a may be formed to project from the gate circuit film 150.

A step height may not be formed on the third side of the display panel that faces the first side of the display panel 100. That is, on the third side, the side surface of the first substrate 110 and the side surface of the second substrate 120 may be positioned on the same plane. On the third side, the data circuit film 130, the printed circuit board 140, and the gate circuit film 150 may not be positioned.

The panel fixing member 300 may be attached to the side portion of the display panel 100 and may fix the display panel 100 to a backlight assembly 800.

The panel fixing member 300 may have a shape that corresponds to the shape of the side portion of the display panel 100. In an exemplary embodiment, if a step height is formed on the side portion of the display panel 100, the panel fixing member 300 may have a shape that corresponds to the step height, for example, a shape that completely surrounds the step height. In another exemplary embodiment, if irregularities are formed on the side portion of the display panel 100, the panel fixing member 300 may have a shape that corresponds to the irregularities, for example, an irregular shape that engage with the irregularities. Accordingly, the panel fixing member 300 can stably be attached to the display pane and fix the display panel 100 to the backlight assembly 800. That is, the panel fixing member 300 can prevent the disassembly of the display panel 100.

The panel fixing member 300 may include a light blocking material. For example, the panel fixing member 300 may be made of a light blocking material. In an exemplary embodiment, the panel fixing member 300 may be made of a black resin. In another exemplary embodiment, the panel fixing member 300 may be made of the same material as a black matrix. In still another exemplary embodiment, the panel fixing member 300 may be coated with the light blocking material. Accordingly, light leakage through an edge portion of the display panel 100 can be prevented. That is, the panel fixing member 300 fixes the display panel 100 to the backlight assembly and blocks the light that is emitted from the edge portion of the display panel 100 to an outside of the display device to improve luminance efficiency.

The panel fixing member 300 may surround the side portion of the display panel 100. In an exemplary embodiment, the panel fixing member 300 may surround the lower surface and the side surface of the display panel 100. In this case, a cross section of the panel fixing member 300 may be in an "L" shape. Further, the panel fixing member 300 may surround even the upper surface of the display panel 100. That is, the side portion of the display panel 100 may be inserted into the panel fixing member 300. In this case, a cross section of the panel fixing member 300 may be in a "C" shape. If the panel fixing member 300 has the "C" shape cross section, the panel fixing member 300 may include an elastic material. That is, the panel fixing member 300 may fix the display panel 100 using an elastic force like a clip or the like. Accordingly, the panel fixing member 300 can stably fix the display panel 100.

The panel fixing member 300 may be divided into at least two parts. In an exemplary embodiment, the panel fixing member 300 may be divided into four parts. Here, the four panel fixing members 300 may be arranged to correspond to two long sides and two short sides of the display panel 100 respectively. Accordingly, the display panel 100 and the panel fixing member 300 may be easily coupled to each other. Further, the display panel 100 may be firmly assembled by coupling any one panel fixing member 300 to the display panel 100 and then coupling the other panel fixing member 300 to the display panel 100 and the one panel fixing member.

The panel fixing member 300 may include a first panel fixing member 310 and the second panel fixing member 320. Further, the panel fixing member 300 may further include a third panel fixing member 330.

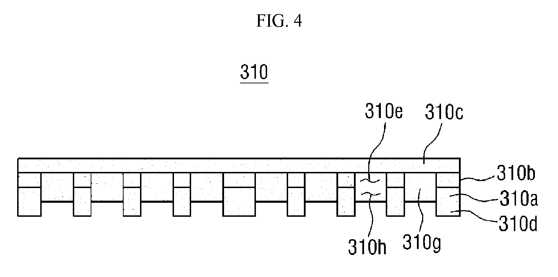

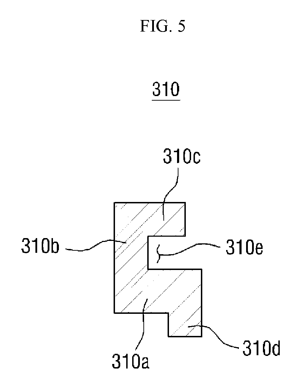

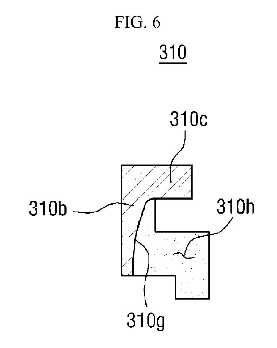

Hereinafter, the first panel fixing member 310 will be described in detail with reference to FIGS. 4 to 6. FIG. 4 is a front view of the first panel fixing member 310 of the display device of FIG. 1. FIG. 5 is a cross-sectional view taken along line F-F' of FIG. 3, and FIG. 6 is a cross-sectional view taken along line G-G' of FIG. 3. In FIGS. 5 and 6, a shaded portion corresponds to a cut surface.

Referring to FIGS. 4 to 6, the first panel fixing member 310 may include a first lower surface support portion 310a, a first side surface support portion 310b, a first upper surface support portion 310c, a first lower projection portion 310d, a first panel seating portion 310e, a first bent surface 310g, and a first opening portion 310h.

The first lower surface support portion 310a may support the lower surface of the display panel 100. That is, the first lower surface support portion 310a may come in contact with the lower surface of the display panel 100 to support the display panel 100. The first lower surface support portion 310a may be arranged in parallel to one surface of the display panel 100 on which an image is displayed. The first lower surface support portion 310a as described above may not be formed on a portion where the data circuit film 130 is formed. That is, the first lower surface support portion 310a may not exist on a portion corresponding to a region in which the data circuit film 130 extends. This is to provide a space in which the data circuit film 130 can be accommodated and a path through which the printed circuit board 140 pass.

The first side surface support portion 310b may be attached to the side surface of the display panel 100 and support the display panel 100. That is, the first side surface support potion 310b may come in contact with the side surface of the display panel 100 to support the display panel 100. The first side surface support portion 310b may be arranged vertically with respect to the one surface of the display panel 100 on which the image is displayed. Further, the first side surface support portion 310b may be formed to extend from the upper surface of the first lower surface support portion 310a to the upper portion of the first lower surface support portion 310a. That is, the first side surface support portion 310b may be formed to project upward from an outer end portion of the first lower surface support portion 310a.

The first upper surface support portion 310c may support the upper surface of the display panel 100. That is, the first upper surface support portion 310c may come in contact with the upper surface of the display panel 100 to support the display panel 100. The first upper surface support portion 310c may be arranged in parallel to the one surface of the display panel 100 on which the image is displayed. Further, the first upper surface support portion 310c may be arranged in parallel to the first lower surface support portion 310a. Further, the first upper surface support portion 310c may be formed to project from the end portion of the first side surface support portion 310b to a direction of the display panel 100.

A gap between the first lower surface support portion 310a and the first upper surface support portion 310c may be equal to or larger than the thickness of the first substrate 110. That is, the gap between the first lower surface support portion 310a and the first upper surface support portion 310c may be equal to or larger than the thickness of the panel projection portion 110a. Accordingly, the display panel 100 can be easily inserted between the first lower surface support portion 310a and the first upper surface support portion 310c.

The width of the first lower surface support portion 310a may be larger than the width of the first upper surface support portion 310c. That is, only a part of the first lower surface support portion 310a can overlap the first upper surface support portion 310c. In other words, on a plan view, the first lower surface support portion 310a may project from the first upper surface support portion 310c. Accordingly, the display panel 100 can be stably supported.

The first lower projection portion 310d may be formed to project from the first lower surface support portion 310a. The first lower projection portion 310d may be formed on the lower portion of the first lower surface support portion 310a. The first lower projection portion 310d may be arranged in parallel to the first side surface support portion 310b. Further, the first lower projection portion 310d may be formed to extend from the inner end portion of the first lower surface support portion 310a. As described above, because the first lower projection portion exists, the first panel fixing member 310 can be stably fixed to the backlight assembly 800. The first lower projection portion 310d may not be formed on a portion where the data circuit film 130 is formed. That is, the first lower projection portion 310d may not exist on a region corresponding to a region in which the lower portion of the data circuit film 130 extends. This is to provide a space in which the data circuit film 130 can be accommodated and a path through which the printed circuit board 140 pass. That is, because one printed circuit board 140 is connected to end portions of at least two data circuit films 130, the data circuit film 130 is unable to be inserted into the panel fixing member 300 like the gate circuit film 150 to be described later. Accordingly, it is required to remove not only the first lower surface support portion 310a on the lower portion of the data circuit film 130 but also the first lower projection portion 310d. If the printed circuit board is not formed to connect the end portions of the at least two data circuit films 130, the first lower surface support portion 310a on the lower portion of the data circuit film 130 and the first lower projection portion 310d may not be removed.

The thickness of the first lower surface support portion 310a is the greatest as compared with those of the first side surface support portion 310b, the first upper surface support portion 310c, and the first lower projection portion 310d. Accordingly, the first panel fixing member 310 can sufficiently support the weight of the display panel 100.

The first panel seating portion 310e may be formed in a space that is surrounded by the first lower surface support portion 310a, the first side surface support portion 310b, and the first upper surface support portion 310c. The first side of the display panel 100 may be seated on the first panel seating portion 310e. Specifically, the first side of the display panel 100 may be inserted into the first panel seating portion 310e. More specifically, the panel projection portion 110a of the display panel 100 may be inserted into the first panel seating portion 3103e. Accordingly, the display panel 100 can be stably fixed to the panel fixing member 300.

The first bent surface 310g may be formed on the region corresponding to the data circuit film 130. Specifically, the first bent surface 310g may be formed on the inner surface of the first side surface support portion 310b that exists at a position corresponding to the data circuit film 130. The first bent surface 310g may come in contact with the data circuit film 130 to adjust the bending degree of the data circuit film 130. That is, the first bent surface 310g may guide the arrangement of the data circuit film 130. The first bent surface 310g may be manufactured to have a curvature value that minimizes a stress applied to the data circuit film 130. The first bent surface 310g can prevent a defect, such as lead crack of the data circuit film 130, due to an abrupt bending of the data circuit film 130.

The first opening portion 310h may be formed on the region corresponding to the data circuit film 130. As described above, the first opening portion 310h may be a space in which the first lower surface support portion 310a and the first lower projection portion 310d do not exist. Because the data circuit film 130 is placed in the first opening portion 310h and the printed circuit board 140 pass through the first opening portion 310h, the overall size of the first panel fixing member 310 can be reduced. Accordingly, the width of a bezel of the display device can also be reduced to provide a display device having a narrow bezel.

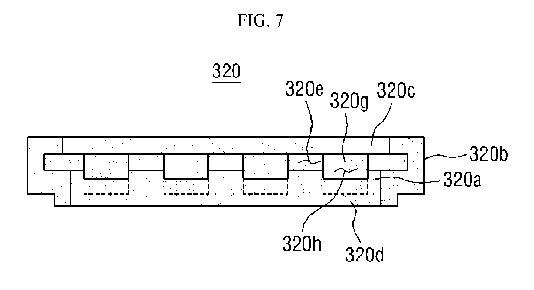

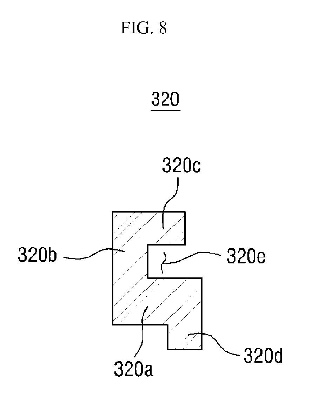

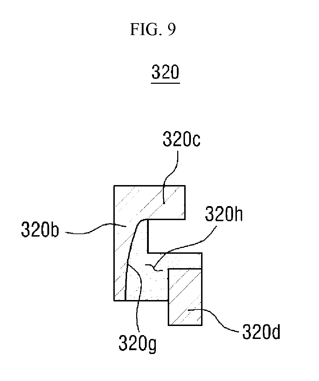

Hereinafter, the second panel fixing member 320 will be described in more detail with reference to FIGS. 3 and 7 to 9. FIG. 7 is a front view of a second panel fixing member 320 of the display device of FIG. 1. FIG. 8 is a cross-sectional view taken along line H-H' of FIG. 3, and FIG. 9 is a cross-sectional view taken along line I-I' of FIG. 3. In FIGS. 8 and 9, a shaded portion corresponds to a cut surface.

Referring to FIG. 3, the end portion of the second panel fixing member 320 may be bent in the direction of the display panel 100. That is, on a plan view, the second panel fixing member 320 may be in substantially "C" shape. As described above, because the second panel fixing member 320 engage with the display panel 100, the display panel 100 can be stably fixed to the panel fixing member 300.

At least two second panel fixing member 320 may be provided. The at least two second panel fixing member 320 may be symmetric about a line pass through a center portion of the display panel 100. In an exemplary embodiment, two second panel fixing members 320 may be provided, and the two second panel fixing members 320 may be arranged at positions corresponding to the short sides of the display panel 100.

Referring to FIGS. 7 to 9, the second panel fixing member 320 may include a second lower surface support portion 320a, a second side surface support portion 320b, a second upper surface support portion 320c, a second lower projection portion 320d, a second panel seating portion 320e, a second bent surface 320g, and a second opening portion 320h. Because these constituent elements respectively correspond to the first lower surface support portion 310a, the first side surface support portion 310b, the first upper surface support portion 310c, the first lower projection portion 310d, the first panel seating portion 310e, the first bent surface 310g, and the first opening portion 310h as described above, explanation will be made about the different points between them.

The second lower support portion 320a may not be formed on a portion where the gate circuit film 150 is formed. That is, the second lower surface support portion 320a may not exist on a region corresponding to the gate circuit film 150 to provide a path through which the gate circuit film 150 passes.

The second lower projection portion 320d may exist even on the portion where the gate circuit film 150 is formed. In other words, the second lower projection portion 320d may exist on the lower portion of the gate circuit film 150. Because the printed circuit board 140 is not connected to the end portion of the gate circuit film 150, the gate circuit film 150 may be inserted into the second panel fixing member 320 through a hole (a second opening portion to be described later) formed in the second lower support portion 320a. Because the second lower projection portion 320d exists on the lower portion of the gate circuit film 150, mechanical strength of the second panel fixing member 320 may be improved.

The second bent surface 320g may be formed on the region corresponding to the gate circuit film 150. Specifically, the second bent surface 320g may be formed on the inner surface of the second side surface support portion 320b that exists at a position corresponding to the gate circuit film 150. The second bent surface 320g can prevent the occurrence of a defect, such as lead crack of the gate circuit film 150, due to an abrupt bending of the gate circuit film 150.

The second opening portion 320h may be formed on the lower portion of the gate circuit film 150. As described above, the second opening portion 320h may be a space in which the second lower surface support portion 320a does not exist. That is, the second opening portion 320h may be an insertion hole into which the gate circuit film 150 is inserted. Because the gate circuit film 150 passes through the second opening portion 320h, the overall size of the second panel fixing member 320 can be reduced.

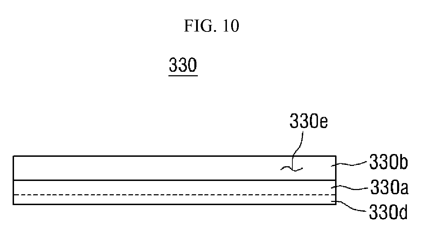

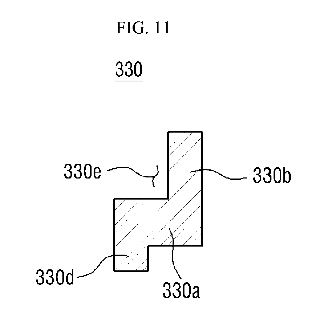

Hereinafter, the third panel fixing member 330 will be described in more detail with reference to FIGS. 10 and 11. FIG. 10 is a front view of a third panel fixing member 330 of the display device of FIG. 1, and FIG. 11 is a cross-sectional view taken along line J-J' of FIG. 3. In FIG. 11, a shaded portion corresponds to a cut surface.

Referring to FIGS. 10 and 11, the third panel fixing member 330 may include a third lower surface support portion 330a, a third side surface support portion 330b, a third lower projection portion 330d, and a third panel seating portion 330e. Because these constituent elements respectively correspond to the first lower surface support portion 310a, the first side surface support portion 310b, the first lower projection portion 310d, and the first panel seating portion 310e as described above, explanation will be made about the different points between them.

The third panel fixing member 330 may not include a portion that comes in contact with the upper surface of the display panel 100. The third panel fixing member 330 may come in contact with the lower surface and the side surface of the display panel 100 to support the display panel 100. A third side of the display panel 100 may be seated on the third panel fixing member 330. The third panel fixing member 330 may not include constituent elements corresponding to the first upper surface support portion 310c as described above. Further, the third panel fixing member 330 may not include the constituent elements corresponding to the first bent surface 310g and the first opening portion 310h.

Referring again to FIGS. 1 to 3, the display device according to an embodiment of the inventive concept may further include a polarizing plate 200 and a backlight assembly 800.

The polarizing plate 200 may be arranged on the display panel 100 to change the phase of light that passes through the display panel 100. The polarizing plate 200 may include a first polarizing plate 210 positioned on the upper portion of the display panel 100 and a second polarizing plate 220 positioned on the lower portion of the display panel 100.

The backlight assembly 800 may provide light to the display panel 100. The backlight assembly 800 may be positioned on the lower portion of the display panel 100. The backlight assembly 800 may be coupled to the panel fixing member 300.

The backlight assembly 800 may include an optical sheet 810, a mold frame 820, a light source portion 830, a light guide plate 840, a reflection plate 850, a bottom mold 860, and a bottom chassis 870.

The optical sheet 810 may be positioned on the lower portion of the second polarizing plate 200. The optical sheet 810 may diffuse or collect the light emitted from the light source 830. The optical sheet 810 may include a plurality of transparent films having various functions and widths if needed.

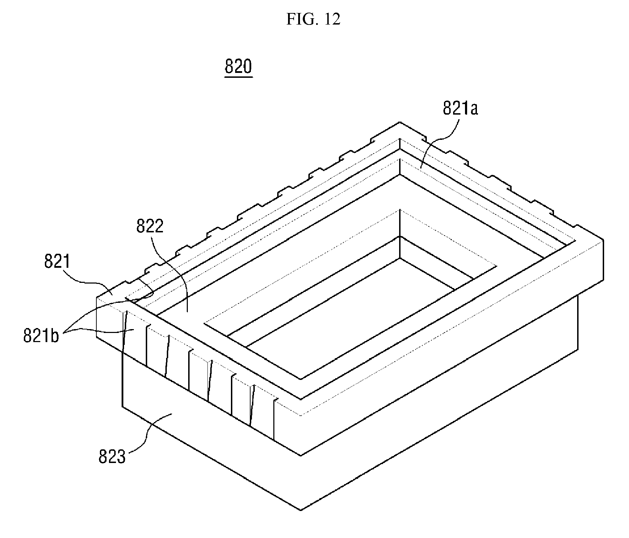

The mold frame 820 may be positioned on the lower portion of the optical sheet 810. The mold frame 820 may support the display panel 100 and the optical sheet 810. Hereinafter, the mold frame 820 will be described in more detail with reference to FIG. 12. FIG. 12 is a perspective view of a mold frame 820 of the display device of FIG. 1.

Referring to FIG. 12, the mold frame 820 may be made of a transparent material. In an exemplary embodiment, the mold frame 820 may be a LSP (Light Screen Plate). Accordingly, the transmittance of the light emitted from the light source portion 830 to the display panel 100 may be increased.

The mold frame 820 may include a panel support portion 821, a sheet support portion 822, and a connection portion 823.

The panel support portion 821 may be a portion that supports the display panel 100. The panel support portion 821 may be formed at a position that corresponds to the panel fixing member 300. The panel support portion 821 may include a step height portion 821 a and recessed portions 821b.

The step height portion 821a may be formed on an inner upper portion of the panel support portion 821. Specifically, the step height portion 821a may be formed at positions corresponding to the first lower projection portion 310d, the second lower projection portion 320d, and the third lower projection portion 330d. The step height portion 821 a engages with the first lower projection portion 310d, the second lower projection portion 320d, and the third lower projection portion 330d in the panel fixing member 300 and fixes the display panel 100 to the mold frame 820 firmly.

The recessed portions 821b may be formed on an outside of the panel support portion 821. The recessed portions 821b may be constantly recessed from the outside of the panel support portion 821 to form a curved surface portion. The recessed portions 821b may be formed at positions corresponding to the first opening portion 310h and the second opening portion 320h. Accordingly, the data circuit film 130 and the gate circuit film 150, which pass through the first opening portion 310h and the second opening portion 320h, respectively, may be positioned on the recessed portions 821b. Because the data circuit film 130 and the gate circuit film 150 are positioned on the recessed portions 821b including slow curved surface portions, the stress that is applied to the data circuit film 130 and the gate circuit film 150 can be further reduced.

The sheet support portion 822 may be formed to project from the inside of the panel support portion 821 to the direction of the center portion of the display panel 100. The sheet support portion 822 may support the optical sheet 810 and may fix the positions of the light guide plate 840 and the reflection plate 850 at the same time.

The connection portion 823 may be formed to project to the lower portions of the panel support portion 821 and the sheet support portion 822. The connection portion 823 may be positioned between the panel support portion 821 and the sheet support portion 822 when viewed from the top. The connection portion 823 may connect the mold frame 820 to the constituent elements provided on the lower portion of the mold frame 820, for example, the bottom mold 860 and the bottom chassis 870.

Referring again to FIGS. 1 to 3, the light source portion 830 may be positioned on the lower portion of the mold frame 820. The light source portion 830 may provide light to the display panel 100. The light source portion 830 may include a circuit board 830a and light sources 830b mounted on the circuit board 830a. The circuit board 830a may be arranged to extend parallel to the short side of the display panel 100. The light source 830b may be mounted on the inner side surface of the circuit board 830a to emit light in the direction of the light guide plate 840. The light source 830b may be an LED (Light Emitting Diode).

The light guide plate 840 may be arranged adjacent to the light source portion 830. Specifically, the light guide plate 840 may be arranged between the sheet support portion of the mold frame 820 and the reflection plate 850. The light guide plate 840 may guide the light incident from the light source portion 830 to the display panel 100.

The reflection plate 850 may be arranged on the lower portion of the light guide plate 840. The reflection plate 850 may reflect the light that is transferred to the lower portion of the light guide plate 840 to the upper portion of the light guide plate 840. That is, like the light guide plate 840, the reflection plate 850 may also guide the light incident from the light source portion 830 to the display panel 100.

The bottom mold 860 may be positioned on the lower portion of the reflection plate 850. The bottom mold 860 may fix the positions of the light source portion 830, the light guide plate 840, and the reflection plate 850. Further, the bottom mold 860 may be made of metal, such as aluminum, and may dissipate heat transferred to the light source portion 830 and the reflection plate 850 to outside of the display device 1. Further, the bottom mold 860 may form a vacant space in a region that is adjacent to the reflection plate 850 to insulate a necessary region.

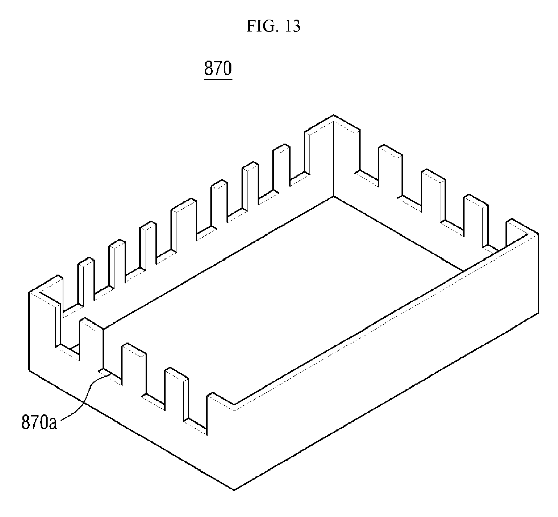

The bottom chassis 870 may be positioned on the lower portion of the bottom mold 860. The bottom chassis 870 may accommodate the constituent elements provided on the upper portion of the bottom chassis 870. Hereinafter, the bottom chassis 870 will be described in more detail with reference to FIG. 13. FIG. 13 is a perspective view of a bottom chassis 870 of the display device of FIG. 1.

Referring to FIG. 13, the bottom chassis 870 may include groove portions 870a. The groove portions 870a may be formed on a side wall of the upper portion of the bottom chassis 870. Further, the groove portions 870a may be formed at positions corresponding to the recessed portions 821b of the mold frame 870a. Accordingly, the data circuit film 130 and the gate circuit film 150, which pass through the first opening portion 310h and the second opening portion 320h of the panel fixing member 300 and the recessed portions 821b of the mold frame 820 in order, may be inserted into the groove portions 870a. In particular, because the data driving chip 130a and the gate driving chip 150a, which have large volumes, are inserted into the groove portions 870a, a narrow bezel can be implemented, and the overall volume of the display device can be reduced.

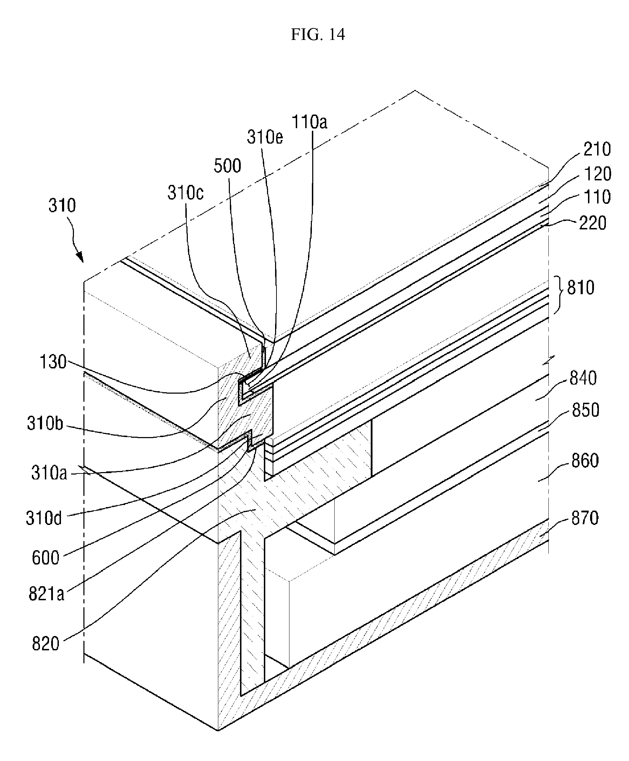

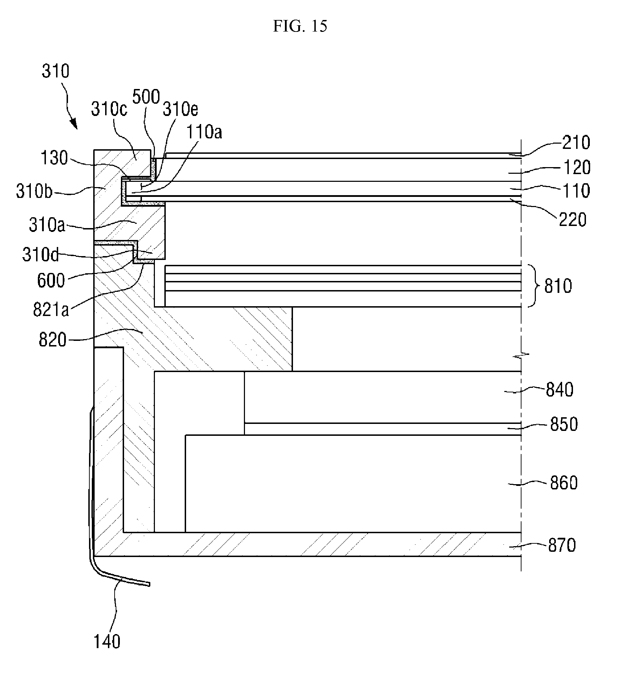

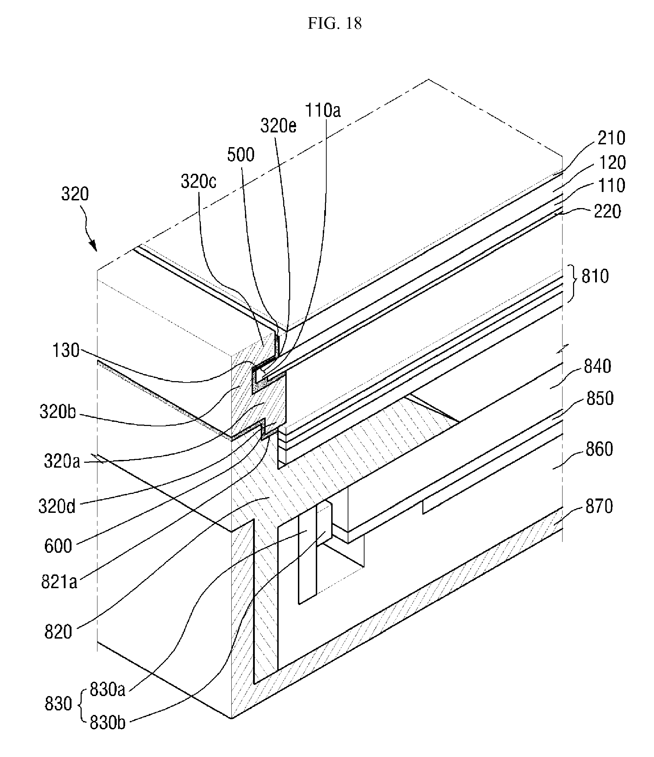

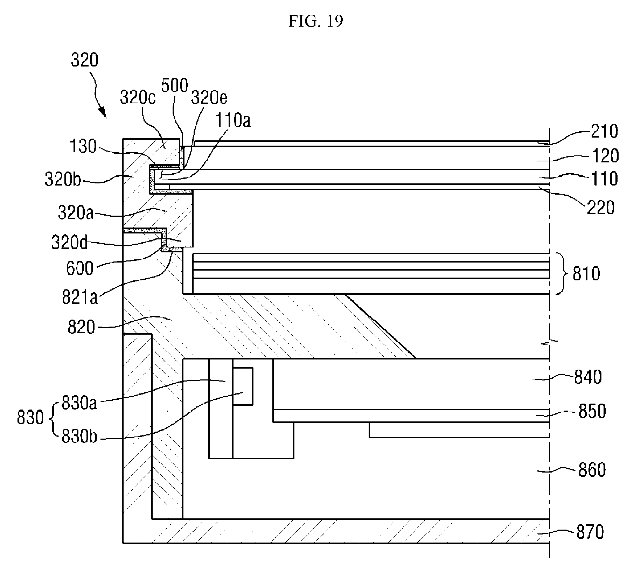

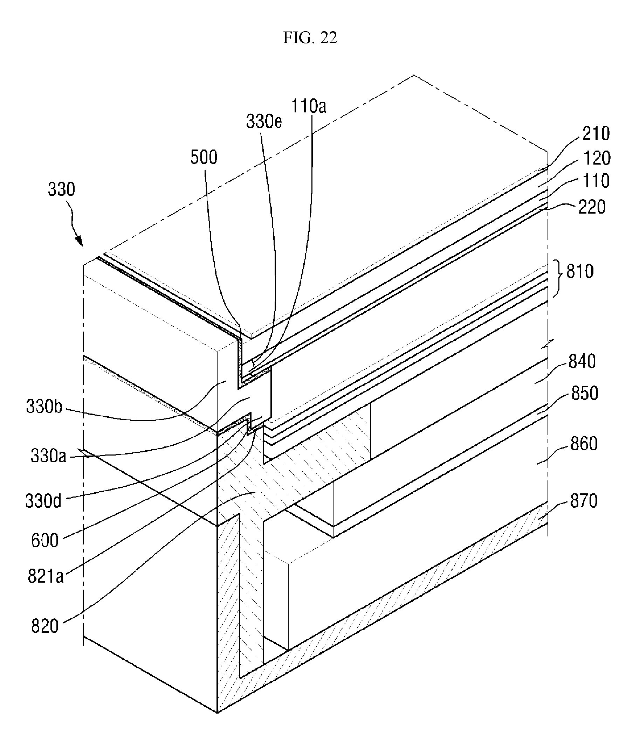

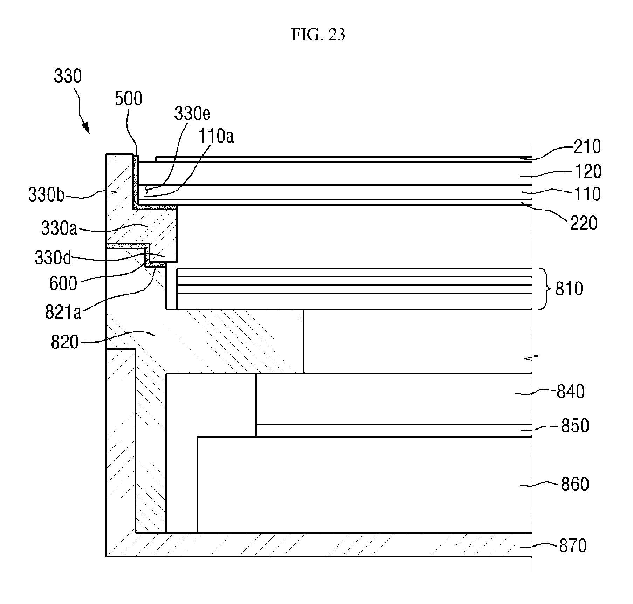

The detailed coupling relations between the constituent elements of the display device as described above are illustrated in FIGS. 14 to 23. FIGS. 14 and 15 are a perspective cross-sectional view and a cross-sectional view taken along line A-A' of FIG. 1, and FIGS. 16 and 17 are a perspective cross-sectional view and a cross-sectional view taken along line B-B' of FIG. 1. FIGS. 18 and 19 are a perspective cross-sectional view and a cross-sectional view taken along line C-C' of FIG. 1, and FIGS. 20 and 21 are a perspective cross-sectional view and a cross-sectional view taken along line D-D' of FIG. 1. FIGS. 22 and 23 are a perspective cross-sectional view and a cross-sectional view taken along line E-E' of FIG. 1.

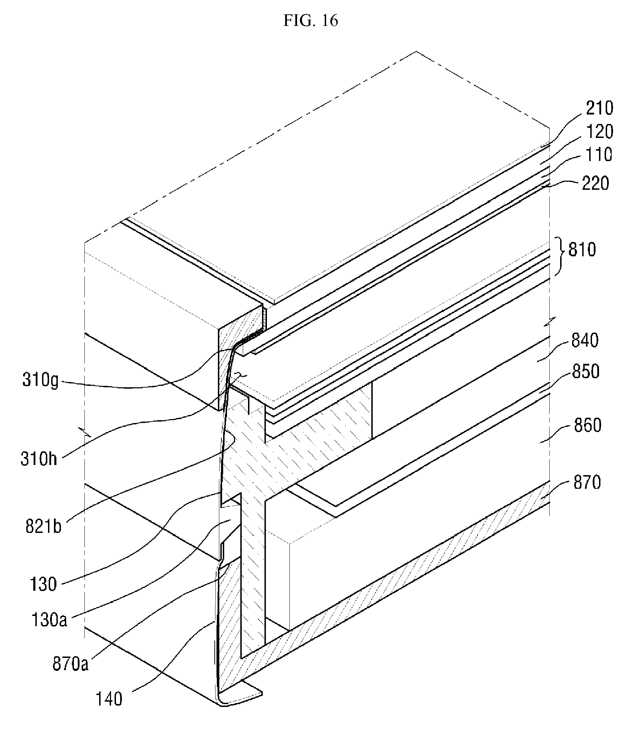

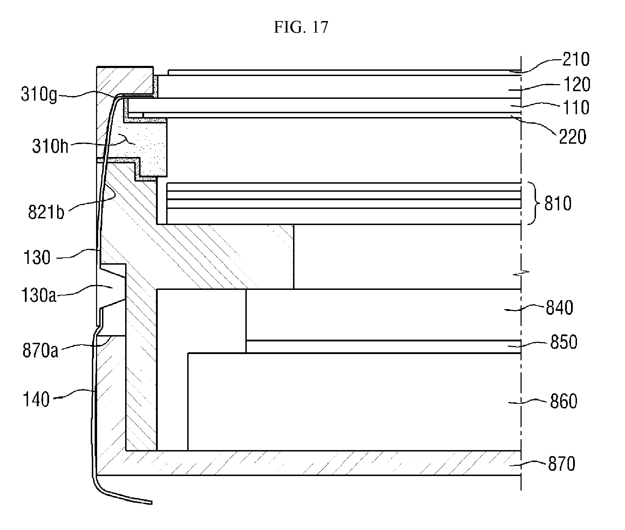

FIGS. 14 to 17 are views illustrating cross-sections of the first side of the display panel 100. That is, FIGS. 14 to 17 are views illustrating coupling relations between the first panel fixing member 310 and the display panel 100. Among them, FIGS. 14 and 15 are cross-sectional views of a portion where the data circuit film 130 is not positioned, and FIGS. 16 and 17 are cross-sectional views of a portion where the data circuit film 130 is positioned.

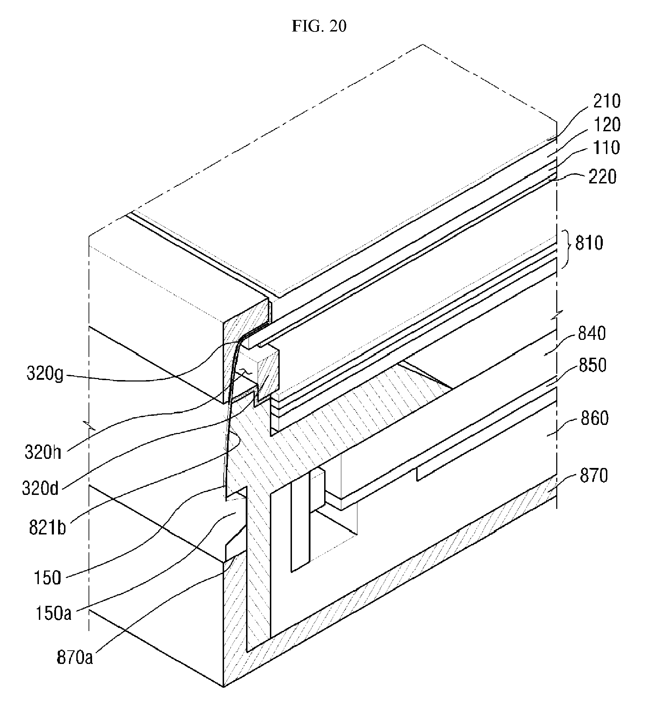

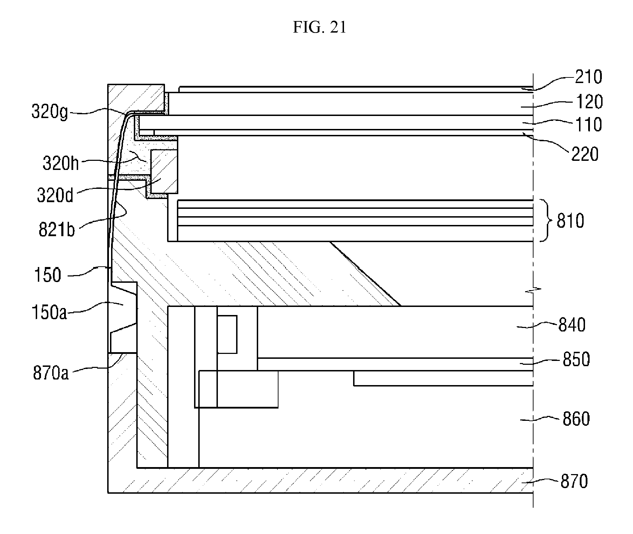

FIGS. 18 to 21 are views illustrating cross-sections of the second side of the display panel 100. That is, FIGS. 18 to 21 are views illustrating coupling relations between the second panel fixing member 320 and the display panel 100. Among them, FIGS. 18 and 19 are cross-sectional views of a portion where the gate circuit film 150 is not positioned, and FIGS. 20 and 21 are cross-sectional views of a portion where the gate circuit film 150 is positioned.

FIGS. 22 and 23 are views illustrating cross-sections of the third side of the display panel 100. That is, FIGS. 22 and 23 are views illustrating coupling relations between the third panel fixing member 330 and the display panel 100.

Referring to FIGS. 14 to 23, a display device according to an embodiment of the inventive concept may include adhesives 500 and a tape 600.

The adhesives 500 may be interposed between the display panel 100 and the panel fixing member 300. The adhesives 500 may couple the display panel 100 and the panel fixing member 300 to each other. The adhesives 500 may be positioned on the side portion and the bottom portion of the display panel 100. In other words, the adhesives 500 may be positioned on the first panel seating portion 310e, the second panel seating portion 320e, and the third panel seating portion 330e.

The adhesives 500 may be cured using light or heat. In an exemplary embodiment, the adhesives 500 may be UV curing adhesives 500, but are not limited thereto. The adhesives 500 may be thermosetting adhesives.

The adhesives 500 may include a light blocking material. In an exemplary embodiment, the adhesives 500 may include black resin. In another exemplary embodiment, the adhesives 500 may include the same material as the material of the black matrix that is included in the display panel 100. In still another exemplary embodiment, the adhesives 500 may include the same material as the light blocking material that is included in the panel fixing member 300.

As described above, because the adhesives 500 are interposed between the display panel 100 and the panel fixing member 300, the display panel 100 can be stably fixed to the panel fixing member 300. That is, because not only a fixing force caused by the shape of the panel fixing member 300 but also a fixing force caused by the adhesive force of the adhesives 500 are applied, the display panel 100 and the panel fixing member 300 can be strongly coupled to each other. Further, because the adhesives 500 include the light blocking material, the light leakage through the edge portion of the display panel 100 can be prevented.

The tape 600 may be interposed between the panel fixing member 300 and the mold frame 820. The tape 600 may couple the panel fixing member 300 and the mold frame 820 to each other. The tape 600 may be positioned on the upper surface of the panel support portion 821 of the mold frame 820. In other words, the tape 600 may be positioned on the lower surface of the panel fixing member 300. In another embodiment, the tape 600 may be formed to cover an outer surface of the panel fixing member 300 and an outer surface of the mold frame 820.

The tape 600 may be a double sided adhesion tape. Further, the tape 600 may include a light blocking material. The light blocking material that is used in the tape 600 may be the same as the light blocking material that is used in the adhesives 500.

As described above, because the tape 600 is interposed between the mold frame 820 and the panel fixing member 300, the panel fixing member 300 can be stably fixed to the mold frame 820. Because not only a fixing force caused by physical lock of the lower projection portion of the panel fixing member 300 on the step height portion 821a of the mold frame 820 but also a fixing force caused by the adhesive force of the tape 600 are applied, the mold frame 820 and the panel fixing member 300 can be strongly coupled to each other. Further, because the tape 600 includes the light blocking material, the light leakage through the edge portion of the display panel 100 can be prevented.

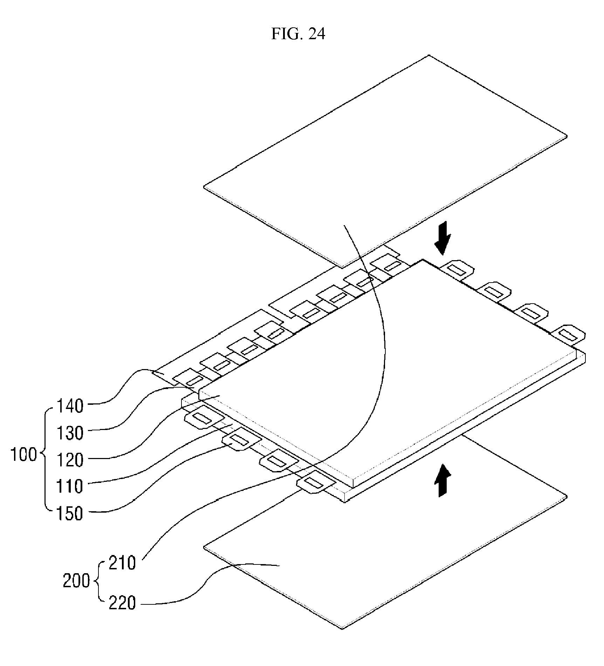

Hereinafter, a method for fabricating a display device according to an embodiment of the inventive concept will be described with reference to FIGS. 24 to 26.

FIGS. 24 to 26 are perspective views illustrating a method for fabricating the display device of FIG. 1. For convenience in explanation, the same reference numerals are used for elements that are substantially the same as the respective elements illustrated in FIG. 1, and the duplicate explanation thereof will be omitted.

Referring to FIG. 24, a display panel 100 and a polarizing plate 200 are coupled to each other. Specifically, a first polarizing plate 210 may be attached to an upper surface of the display panel 100, and a second polarizing plate 220 may be attached to a lower surface of the display panel 100.

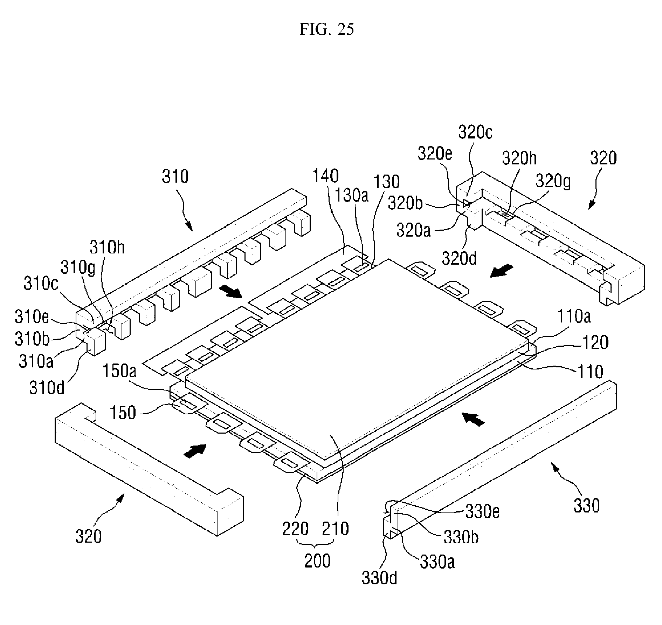

Referring to FIG. 25, a panel fixing member 300 is coupled to the display panel 100. Specifically, a first panel fixing member 310 may be coupled to a first side of the display panel 100, a second panel fixing member 320 may be coupled to a second side of the display panel 100, and a third panel fixing member 330 may be coupled to a third side of the display panel 100. Although not illustrated in FIG. 25, adhesives 500 may be interposed between the panel fixing member 300 and the display panel 100 to strengthen the coupling of the panel fixing member 300 to the display panel 100.

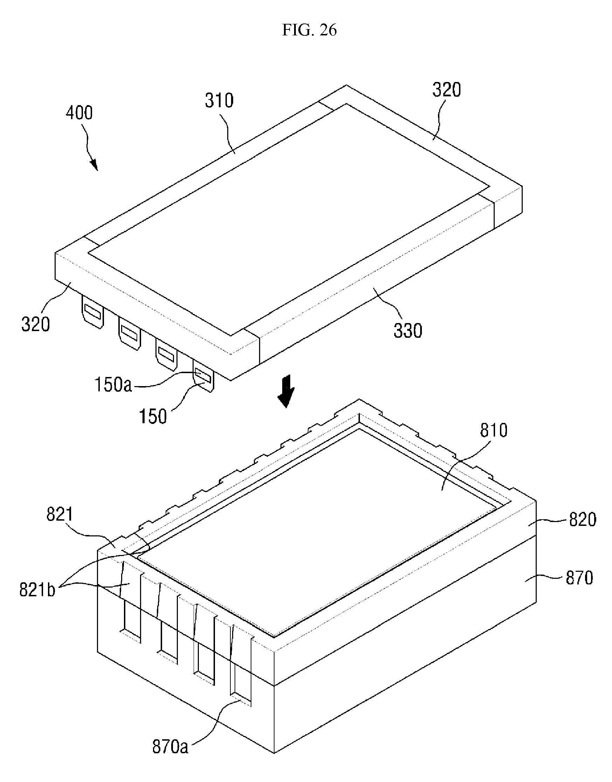

Referring to FIG. 26, a panel assembly 400, which is formed through coupling of the display panel 100, the polarizing plate 200, and the panel fixing member 300 to each other, is coupled to a backlight assembly 800. Specifically, the panel assembly 400 and the backlight assembly 800 may be aligned so that a lower surface of the panel assembly 400, that is, a portion where the second polarizing plate 220 is positioned, face an upper surface of the backlight assembly 800, that is, a portion where an optical sheet 810 is positioned. More specifically, the display panel 100 and the panel fixing member 300 may be arranged so that a data circuit film 130 that is positioned on the first side of the display panel 100 and a first opening portion 310h of the first panel fixing member 310 correspond to each other, a gate circuit film 150 that is positioned on the second side of the display panel and a second opening portion 320h of the second panel fixing member 320 correspond to each other, and the third side of the display panel 100 and the third panel fixing member 330 correspond to each other. The panel assembly 400 and the backlight assembly 800 may be coupled to each other. That is, the panel assembly 400 and the backlight assembly 800 may be coupled to each other so that the data circuit film 130 and the gate circuit film 150 pass through a first opening portion 310h and second opening portion 320h and are bent to extend to the lower portion of the panel fixing member 300.

As described above, according to the method for fabricating a display device according to an embodiment of the inventive concept, because the panel fixing member 300 is used to couple the display panel 100 and the backlight assembly 800, the assembling process of the display device can be simplified. Further, the display device having a thin bezel width, which can prevent disassembly of a display panel 100 and light leakage through an edge portion of the display panel 100, is provided.

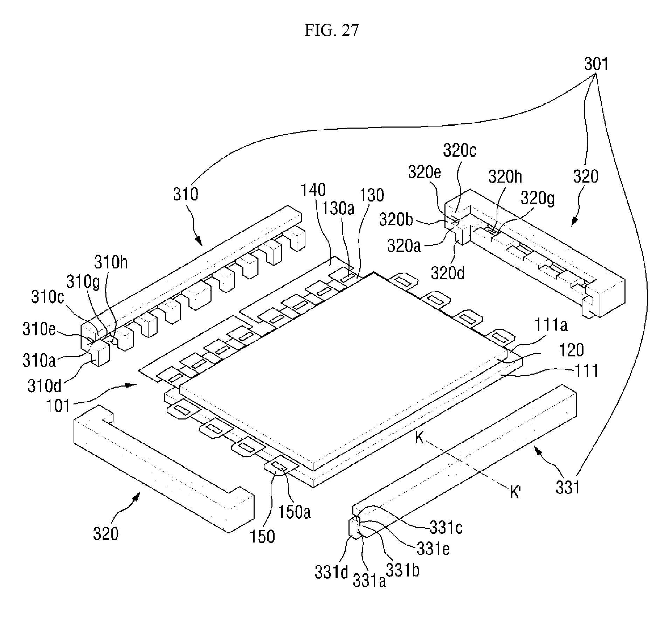

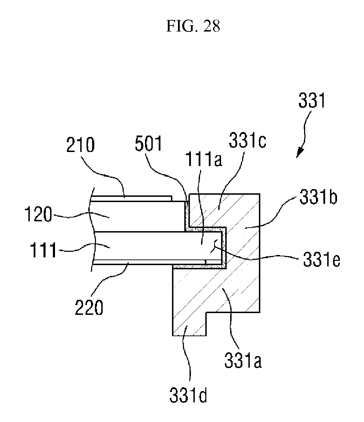

FIG. 27 is a perspective view of a display panel 101 and a panel fixing member 301 of a display device according to another embodiment of the inventive concept, and FIG. 28 is a cross-sectional view taken along line K-K' of FIG. 27. For convenience in explanation, the same reference numerals are used for elements that are substantially the same as the respective elements illustrated in FIG. 1, and the duplicate explanation thereof will be omitted.

Referring to FIG. 27, a first substrate 111 of the display panel 101 is sufficiently larger than a second substrate 120, and a step height may be formed on not only the first side and the second side of the display panel 101 but also the third side of the display panel 101. That is, a panel projection portion 111a may exist not only on the first side and the second side of the panel projection portion 111a but also on the third side thereof. This may be for a third panel fixing member 331 to be described later to stably fix the display panel 101.

Referring to FIG. 28, the third panel fixing member may include not only a third lower surface support portion 331 a, a third side surface support portion 331b, a third lower projection portion 331d, and a third panel seating portion 331e but also a third upper surface support portion 330c. That is the third panel fixing member 331 may support not only a lower surface and a side surface of the display panel 101 but also an upper surface thereof. In an exemplary embodiment, the third panel fixing member 331 may surround the panel projection portion 111a formed on the third side of the display panel 101. Accordingly, the shape of adhesives 501 that are interposed between the display panel 101 and the third panel fixing member 331 may be changed to correspond to the shape of an interface between the display panel 101 and the third panel fixing member 331.

As described above, according to another embodiment of the inventive concept, the display panel 101 and the panel fixing member 301 can be more firmly coupled to each other by changing design of the display panel 101 and the third panel fixing member 331.

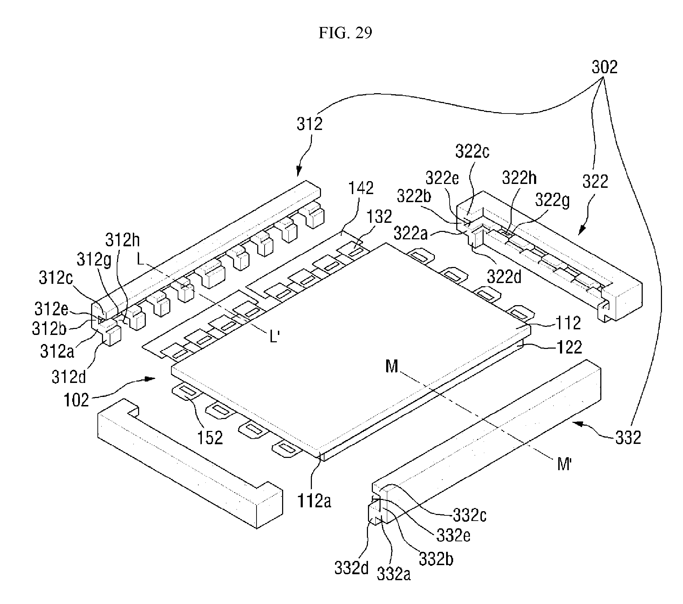

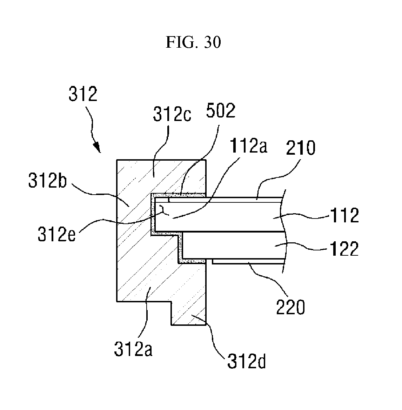

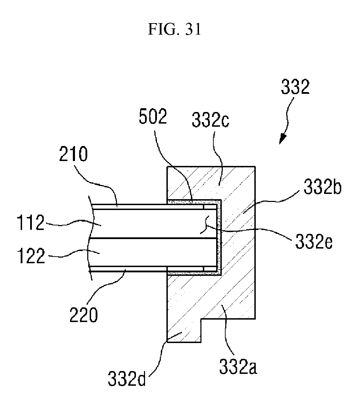

FIG. 29 is a perspective view of a display panel 102 and a panel fixing member 302 of a display device according to still another embodiment of the inventive concept. FIG. 30 is a cross-sectional view taken along line L-L' of FIG. 29, and FIG. 31 is a cross-sectional view taken along line M-M' of FIG. 29. For convenience in explanation, the same reference numerals are used for elements that are substantially the same as the respective elements illustrated in FIG. 1, and the duplicate explanation thereof will be omitted.

Referring to FIG. 29, a display panel 102 may be a flip panel. That is, a first substrate 112 of the display panel 102 may be positioned on an upper portion of a second substrate 122. The second substrate 122 of the display panel 102 may be positioned on a lower portion of the first substrate 112. A panel projection portion 112a may be formed on an upper portion of the display panel 102. A data circuit film 132, a printed circuit board 142, and a gate circuit film 152 may be attached to a lower surface of the first substrate 112.

Accordingly, the shape of a panel fixing member 302 that fixes the display panel 102 may be changed. Specifically, referring to FIG. 30, a step height may be formed on an upper surface of a first lower surface support portion 312a of a first panel fixing member 312. The first lower surface support portion 312a may support not only a lower surface of the first substrate 112 but also a lower surface of the second substrate 122. Further, a first side surface support portion 312b and a first upper surface support portion 312c may cover a side surface and an upper surface of the first substrate 112. Here, the first upper surface support portion 312c may completely overlap the first lower surface support portion 312a. Further, the first lower portion projection portion 312d may overlap an end portion of the first upper surface support portion 312c.

A first panel seating portion 312e may surround not only the first substrate 112 but also the second substrate 122. Further, a first bent surface 312g and a first opening portion 312h may also be changed according to the shapes of a data circuit film 132 and a printed circuit board 142 included in the flip panel.

Further, a second lower surface support portion 322a, a second side surface support portion 322b, a second upper surface support portion 322c, a second lower projection portion 322d, a second panel seating portion 322e, a second bent surface 322g, and a second opening portion 322h of a second panel fixing member 322 may be changed to correspond to the first lower surface support portion 312a, the first side surface support portion 312b, the first upper surface support portion 312c, the first lower projection portion 312d, the first panel seating portion 312e, the first bent surface 312g, and the first opening portion 312h of the first panel fixing member 312 as described above.

Referring to FIG. 31, a third panel fixing member 332 may surround a third side of the display panel 102 on which a step height is not formed. That is, the third panel fixing member 332 may be in a "C" shape. Specifically, a third lower surface support portion 332a, a third side surface support portion 332b, and a third upper surface support portion 332c of the third panel fixing member 332 may form a third panel seating portion 332e and may surround the third side of the display panel 102. Further, a third lower projection portion 332d may overlap an end portion of the third upper surface support portion 332c.

Further, referring to FIGS. 30 and 31, the shape of adhesives 502 that are interposed between the display panel 102 and the panel fixing member 302 may be changed to correspond to the shape of an interface between the display panel 102 and the panel fixing member 302.

As described above, according to the display device according to still another embodiment of the inventive concept, the panel fixing member 302 may project from the upper surface of the display panel 102, and thus the panel fixing member 302 may absorb external impact that may be applied to the upper surface of the display panel 102. Accordingly, the overall mechanical strength of the display device can be improved.

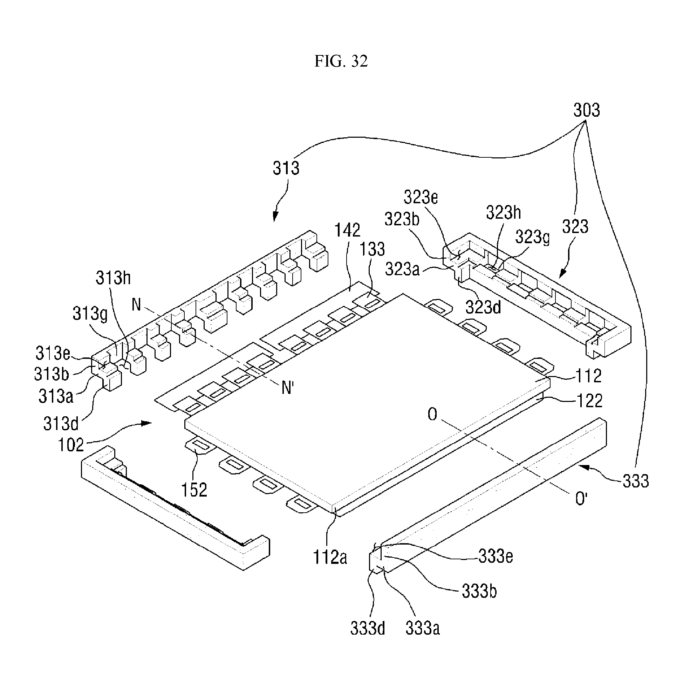

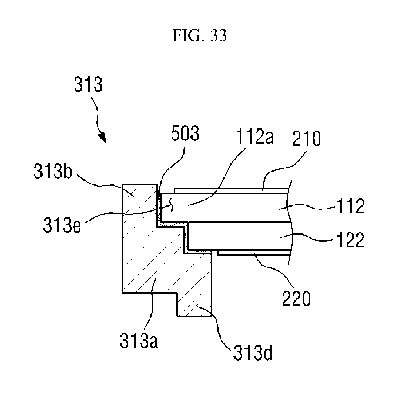

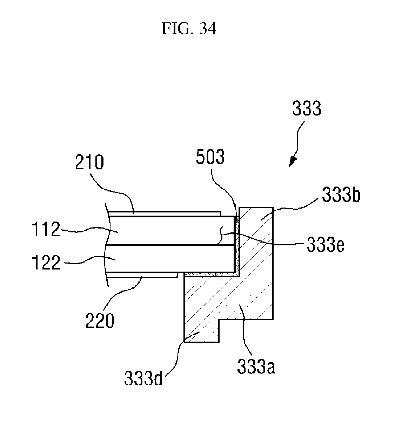

FIG. 32 is a perspective view of a display panel 102 and a panel fixing member 303 of a display device according to yet still another embodiment of the inventive concept. FIG. 33 is a cross-sectional view taken along line N-N' of FIG. 32, and FIG. 34 is a cross-sectional view taken along line O-O' of FIG. 32. For convenience in explanation, the same reference numerals are used for elements that are substantially the same as the respective elements illustrated in FIGS. 29 to 31, and the duplicate explanation thereof will be omitted.

A panel fixing member 303 of a display device according to yet still another embodiment of the inventive concept may fix such as flip panel in another way. That is, the panel fixing member 303 may not include a portion that may support an upper surface of a display panel 102.

Referring to FIG. 32, the display panel 102 may be the same flip panel as that illustrated in FIG. 29.

Referring to FIG. 33, a first panel fixing member 313 may include a first lower surface support portion 313a, a first side surface support portion 313b, a first lower projection portion 313d, a first panel seating portion 313e, a first bent surface 313g, and a first opening portion 313h. That is, the first panel fixing member 313 may not include a first upper surface support portion 312c.

A second panel fixing member 323 may include a second lower surface support portion 323a, a second side surface support portion 323b, a second lower projection portion 323d, a second panel seating portion 323e, a second bent surface 323g, and a second opening portion 323h. That is, the second panel fixing member 323 may not include a second upper surface support portion 322c.

Referring to FIG. 34, a third panel fixing member 333 may include a third lower surface support portion 333a, a third side surface support portion 333b, and a third lower projection portion 333d, and a third panel seating portion 333e. That is, the third panel fixing member 333 may not include a third upper surface support portion 333c.

Further, referring to FIGS. 33 and 34, the shape of adhesives 503 that are interposed between the display panel 102 and the panel fixing member 303 may be changed to correspond to the shape of an interface between the display panel 102 and the panel fixing member 303.

As described above, according to the display device according to yet still another embodiment of the inventive concept, the panel fixing member 303 may not include a portion that can support the upper surface of the display panel 102, and thus a slim display device can be obtained.

## Claims

1. A display device comprising:
a display panel (100) having a first side; and;
a first panel fixing member (300) attached to the first side of the display panel (100) using adhesives (500) interposed between the display panel (100) and the first panel fixing member (300),
wherein the first panel fixing member (300) has a shape that corresponds to a shape of the first side of the display panel (100).

2. The display device of claim 1, wherein the first panel fixing member (300) is made of a light blocking material.

3. The display device of claim 1 or 2, wherein the first panel fixing member (300) is divided into at least two parts.

4. The display device of claim 1 or 2, wherein the first panel fixing member (300) surrounds the first side of the display panel (100).

5. The display device of one of claims 1 to 3, wherein the display panel (100) includes a plurality of circuit films (130) positioned on the first side,
the first panel fixing member (300) includes a lower surface support portion (310a) and a side surface support portion (310b) respectively supporting a lower surface and the first side of the display panel (100), and
the lower surface support portion (310a) is not formed on lower portions of the plurality of circuit films (130).

6. The display device of claim 5,wherein the side surface support portion (310b) includes bent surfaces formed on upper portions of the plurality of circuit films (130).

7. The display device of one of claims 1 to 4, wherein the display panel (100) includes a plurality of circuit films (130) positioned on the first side,
the first panel fixing member (300) includes opening portions (310h) formed at positions that correspond to the plurality of circuit films (130), and
the plurality of circuit films (130) pass through the opening portions (310h).

8. The display device of one of claims 1 to 5, wherein
the display panel (100) further comprises a second side adjacent to the first side; and
a second panel fixing member (320) attached to the second side of the display panel (100).

9. The display device of claim 8, wherein a step height is formed on the first side and the second side of the display panel (100), and
the first panel fixing member (300) and the second panel fixing member (320) surround a panel projection portion that is formed by the step height.

10. The display device of claim 8 or 9, wherein at least two second panel fixing members (300, 320, 330) are provided, and
the at least two second panel fixing members (300, 320, 330) are symmetric about a line pass through a center of the display panel (100).

11. The display device of one of claims 8 to 10, further comprising a third panel fixing member (330) attached to a third side of the display panel (100) that faces the first side,
wherein the third panel fixing member (330) includes a lower surface support portion and a side surface support portion respectively supporting a lower surface and a side surface of the display panel (100).

12. The display device of claim 11,
wherein the display panel (100) is coupled to the first panel fixing member (300), the second panel fixing member (320), and the third panel fixing member (330) by adhesives (500).

13. The display device of one of claims 6 to 9, wherein the display panel (100) comprises:
a plurality of data circuit films (130) positioned on the first side to be spaced apart from each other; and
a plurality of gate circuit films (150) positioned on the second side to be spaced apart from each other,
wherein the first panel fixing member (300) includes a plurality of open spaces formed on lower portions of the plurality of data circuit films (130), and
the second panel fixing member includes a plurality of film insertion portions into which the plurality of gate circuit films (150) are inserted.

14. A method for fabricating a display device comprising:
forming a panel assembly (400) that includes a display panel (100), a panel fixing member (300) attached to at least one side of the display panel (100), and adhesives (500) interposed between the display panel (100) and the panel fixing member (300); and coupling the panel assembly (400) to a backlight assembly (800).

15. The method for fabricating a display device of claim 14, wherein the forming the panel assembly (400) comprises:
arranging the display panel (100) and the panel fixing member (300) so that a circuit film (130) positioned on the side of the display panel (100) and an opening portion (310h) formed on the panel fixing member (300) correspond to each other; and
coupling the display panel (100) and the panel fixing member (300) to each other so that the circuit film (130) passes through the opening portion (310h) and is bent to extend to a lower portion of the panel fixing member (300).
